# EUROPEAN PATENT APPLICATION

(11) **EP 3 151 206 A1**
(43) Date of publication of application: **05.04.2017**
(21) Application number: 16185620.8
(22) Date of filing: 25.08.2016
(51) Int. Cl.: G07G 1/00, G07G 1/14, G06Q 20/20

(54) **CHECK-OUT SYSTEM, REGISTRATION APPARATUS, SETTLEMENT APPARATUS, AND CONTROL PROGRAM**

(30) Priority: 25.09.2015 JP 2015187957
(71) Applicant: Toshiba TEC Kabushiki Kaisha, Tokyo 141-0032 (JP)
(72) Inventor: YABU, Syuji, Shinagawa-ku, Tokyo 141-8562 (JP)
(74) Representative: Takeuchi, Maya

(57) **Abstract**

A registration apparatus transmits, to any of a plurality of settlement apparatuses, accounting data and a list indicating an order in which the accounting data is to be sent to the plurality of settlement apparatuses. The settlement apparatus determines whether or not settlement of a transaction is possible, when the accounting data and the list are received. The settlement apparatus transmits a permission response to the registration apparatus, if settlement of the transaction is possible. The settlement apparatus transfers the accounting data and the list to another settlement apparatus, according to the list, if settlement of the transaction is not possible.

## Description

Embodiments described herein relate generally to a check-out system, a registration apparatus and a settlement apparatus, which are included in the system, and a control program causing a computer to implement functions of the registration apparatus and the settlement apparatus.

A commonly used check-out system for a mass retailer includes a registration apparatus that generates accounting data required for settlement of a transaction and a separate settlement apparatus that processes the settlement of the transaction based on the accounting data. The registration apparatus waits for the input of data relating to merchandise sales. If payment is ordered by an operator, the registration apparatus generates accounting data based on the merchandise data, and transmits the accounting data to the settlement apparatus. The settlement apparatus waits for the input of payment data corresponding to the accounting data. If the payment data is input by the operator, the settlement apparatus processes the settlement of the transaction based on the accounting data and the payment data. Such a check-out system, in which the registration apparatus and the settlement apparatus are separated, employs a dual system in which separate salespersons respectively operate the registration apparatus and the settlement apparatus, or a sharing system, sometimes called a semi-self-type, in which a salesperson operates the registration apparatus and a shopper operates the settlement apparatus.

In a case of the semi-self-type, if it takes time for the shopper to operate the settlement apparatus, the subsequent shopper has to wait for settlement. In order to avoid such delays, a plurality of settlement apparatuses are typically connected to a single registration apparatus. The registration apparatus monitors the status of each settlement apparatus, automatically selects an unoccupied settlement apparatus, and transmits settlement information to the selected settlement apparatus. Alternatively, the registration apparatus displays the state of each settlement apparatus on a display, and transmits settlement information to a settlement apparatus that a salesperson selects as an unoccupied settlement apparatus.

However, in either system type, since the registration apparatus monitors the status of each settlement apparatus, the registration apparatus is required to collect and analyze status information from the settlement apparatuses. These operations may be lengthy.

To help making check out operations faster, a check-out system with a registration apparatus, may be configured to generate accounting data for settlement of a transaction, may be connected through a network to a plurality of settlement apparatuses, and may be configured to process settlement of the transaction based on the accounting data.

The registration apparatus may comprise: a transmission section configured to transmit, to any settlement apparatus through the network, the accounting data and a list indicating an order in which the accounting data is to be sent to the settlement apparatuses; and a notification section configured to receive, through the network, a permission response from any settlement apparatus and identify the settlement apparatus that sent the permission response, and display a message with the name of the settlement apparatus that sent the permission response. The settlement apparatus may comprise: a reception section configured to receive the accounting data and the list through the network; a determination section configured to determine whether settlement of the transaction is possible; a permission response section configured to transmit the permission response to the registration apparatus through the network, if settlement of the transaction is possible; and a transfer section configured to transfer, through the network, the accounting data and the list to another settlement apparatus, according to the list, if settlement of the transaction is not possible. The settlement apparatus may further comprises: an error response section configured to transmit an error response to the registration apparatus through the network if the accounting data and the list are received when settlement of the transaction is not possible, if all the other settlement apparatuses are also unavailable for settlement of the transaction.

The registration apparatus may further comprise a notification section configured to display an error message, when an error response is received from any settlement apparatus through the network.

The notification section may further be configured to display a message indicating the settlement apparatus that sent the permission response, if a permission response is received, and to display a message indicating settlement is not possible if the error response is received.

In an embodiment, the registration apparatus is configured to issue an accounting ticket if the error response is received.

In addition, the settlement apparatus further may comprise: an error response section configured to transmit an error response to the registration apparatus through the network if the accounting data and the list are received when settlement of the transaction is not possible and the settlement apparatus is last on the list.

The determination section may further be configured to check a busy flag of the settlement apparatus.

The transfer unit may advantageously be configured to determine whether the settlement apparatus is last on the list.

The invention also refers to a registration apparatus comprising: a generation section configured to generate accounting data for settlement of a transaction; a transmission section configured to transmit, through a network to any of a plurality of settlement apparatuses, the accounting data and a list indicating an order in which the accounting data is to be sent to the settlement apparatuses; and a notification section configured to receive a permission response from any settlement apparatus, identify the settlement apparatus that sent the permission response, and display a message indicating the name of the settlement apparatus that sent the permission response.

In the registration apparatus the notification section may further be configured to receive an error response from any settlement apparatus and display a message indicating that settlement is not possible.

The registration apparatus may be configured to issue an accounting ticket if an error response is received.

The registration apparatus may further comprise an edit section configured to allow a user to edit the list.

In the registration apparatus,the transmission section may further beconfigured to read the list, determine a settlement apparatus ID of the first settlement apparatus on the list, and transmit the settlement apparatus ID with the accounting data and the list.

In the registration apparatus the transmission section may further be configured to transmit the registration apparatus ID of the registration apparatus with the settlement apparatus ID, the accounting data, and the list.

A settlement apparatus according to the invention may comprise: a reception section configured to receive, through a network, accounting data for settlement of a transaction and a list indicating an order in which accounting data is to be sent to a plurality of settlement apparatuses including the settlement apparatus; a processing section configured to process settlement of the transaction based on the accounting data; a determination section configured to determine whether or not settlement of the transaction is possible; a permission response section configured to transmits the permission response through the network if settlement of the transaction is possible; and a transfer section configured to transfer, through the network, the accounting data and the list to another settlement apparatus according to the list, if settlement of the transaction is not possible.

The settlement apparatus may further comprise: an error response section configured to transmit an error response through the network if the accounting data and the list are received when settlement of the transaction is not possible, if all the other settlement apparatuses in the plurality of settlement apparatuses are also unavailable for settlement of the transaction.

In the settlement apparatus the determination section may further beconfigured to determine whether the settlement apparatus is last on the list.

In the settlement apparatus,the transfer section may further be configured to transfer the accounting data and the list to the next settlement apparatus on the list, if the settlement apparatus is not last on the list.

According to the invention a control program may be stored in a non-transitory recording medium, the control program causing a computer in a registration apparatus that generates accounting data for settlement of a transaction to implement functions of: transmitting, to any of a plurality of settlement apparatuses through a network, the accounting data and a list indicating an order in which the accounting data is to be sent to the settlement apparatuses; and displaying information for identifying the settlement apparatus, among the plurality of settlement apparatuses, which sends a permission response through the network.

The control program stored in a non-transitory recording medium, may be configured to operate in a computer in a settlement apparatus including a reception section that receives, through a network from a registration apparatus that generates accounting data for settlement of a transaction, the accounting data and a list indicating an order in which the accounting data is to be sent to a plurality of settlement apparatuses including the settlement apparatus. The program may implement functions of: processing settlement of the transaction based on the accounting data; determining whether settlement of the transaction is possible; transmitting a permission response to the registration apparatus through the network, if settlement of the transaction is possible; and
transferring, through the network, the accounting data and the list to another settlement apparatus, according to the list, if settlement of the transaction is not possible.

### DESCRIPTION OF THE DRAWINGS

FIG. 1 is a schematic view of a check-out system according to an embodiment.
FIG. 2 is a block diagram illustrating main circuit configurations of a registration apparatus and a settlement apparatus of the check-out system of FIG. 1.
FIG. 3 is a schematic view illustrating main data memory areas formed in respective RAMs of the registration apparatus and the settlement apparatus of FIG. 2.
FIG. 4 is a schematic view illustrating main data memory areas formed in a RAM and an auxiliary storage device of the registration apparatus of FIG. 2.
FIG. 5 is a flow chart illustrating a main procedure of an information process that a CPU of the registration apparatus of FIG. 2 executes according to a control program.
FIG. 6 is a flow chart illustrating a second procedure of the information process that the CPU of the registration apparatus of FIG. 2 executes according to the control program.
FIG. 7 is a flow chart illustrating a main procedure of an information process that a CPU of the settlement apparatus of FIG. 2 executes according to the control program.
FIG. 8 is a schematic view illustrating an example of a registration screen displayed on a touch panel of the registration apparatus of FIG. 2.
FIG. 9 is a schematic view illustrating an example of an accounting confirmation screen displayed on the touch panel of the registration apparatus of FIG. 2.
FIG. 10 is a schematic view illustrating an example of the accounting confirmation screen of FIG. 9 when a permission response is received.
FIG. 11 is a schematic view illustrating an example of the accounting confirmation screen of FIG. 9 when an accounting impossible response is received.
FIG. 12 is a schematic view illustrating an example of a payment method select screen displayed on a touch panel of the settlement apparatus of FIG. 2.
FIG. 13 is a schematic view illustrating an example of a payment screen displayed on the touch panel of the settlement apparatus of FIG. 2.
FIG. 14 is a schematic view illustrating an example of a completion screen displayed on the touch panel of the settlement apparatus of FIG. 2.

### DETAILED DESCRIPTION

Embodiments described herein provide a check-out system in which a registration apparatus does not have to monitor the status of each settlement apparatus. A registration apparatus and settlement apparatus of the check-out system are described herein.

In general, according to one embodiment, a check-out system has a registration apparatus, which generates accounting data for settlement of a transaction, connected through a network to a plurality of settlement apparatuses, which process settlement of the transaction based on the accounting data.

The registration apparatus includes a transmission section and a notification section. The transmission section transmits, to any settlement apparatus through the network, the accounting data and a list indicating an order in which the accounting data is to be sent to the settlement apparatuses. The notification section receives, through the network, a permission response from any settlement apparatus and identifies the settlement apparatus that sent the permission response.

Each settlement apparatus includes a reception section, a determination section, a permission response section, and a transfer section. The reception section receives the accounting data and the list through the network. The determination section determines whether or not settlement of the transaction is possible. The permission response section transmits the permission response to the registration apparatus through the network, when settlement of the transaction is possible. The transfer section transfers, through the network, the accounting data and the list to another settlement apparatus, according to the list, if settlement of the transaction is not possible.

Hereinafter, a description, with reference to the drawings, will be given of an embodiment of a check-out system in which a registration apparatus does not have to monitor the status of each settlement apparatus. In this embodiment, a semi-self-type check-out system is exemplified in which a salesperson operates a registration apparatus and a shopper operates a settlement apparatus.

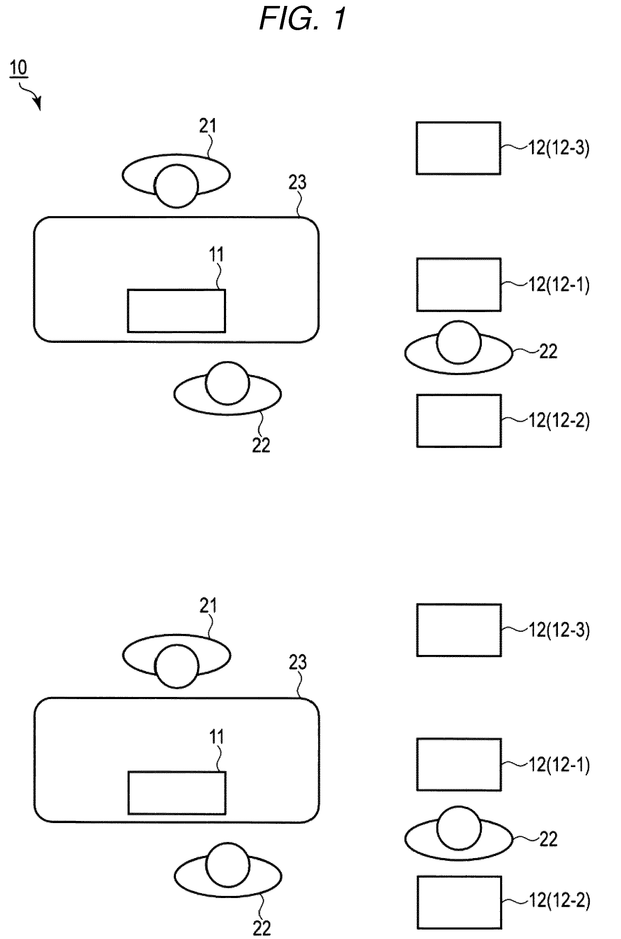

FIG. 1 is a schematic view of a check-out system 10 according to the embodiment. The check-out system 10 includes a plurality of registration apparatuses 11, and settlement apparatuses 12 whose number is larger than the number of the registration apparatuses 11. The registration apparatuses 11 and the settlement apparatuses 12 are arranged in each check-out lane in a store.

FIG. 1 illustrates a case where two registration apparatuses 11 and six settlement apparatuses 12 are arranged in two check-out lanes. In FIG. 1, one registration apparatus 11 and three settlement apparatuses 12 are arranged in one check-out lane. The numbers of registration apparatuses 11 and settlement apparatuses 12, which are included in the check-out system 10, are arbitrary. The ratio between the number of registration apparatuses 11 and the number of settlement apparatuses 12, which are arranged in the check-out lane, is also arbitrary.

The operator of the registration apparatus 11 is a salesperson 21 who works as a checker. The operator of the settlement apparatus 12 is a shopper 22 who purchases merchandise sold at a store. However, the salesperson 21 may operate the settlement apparatuses 12 in some cases.

The registration apparatus 11 is provided on a work table 23 in FIG. 1. The work table 23 has a rectangular top plate. A plurality of work tables 23, which are arranged so as to be substantially parallel in the longitudinal directions of the top plates, form passages (checkout lanes) for the shoppers 22.

The registration apparatus 11 has respective functions of registration of purchase merchandise, generation of accounting data, transfer of the accounting data to a settlement apparatus 12. The registration of purchase merchandise is a process wherein merchandise to be purchased by the shopper 22 is input to the registration apparatus 11. For example, if a bar code that is attached to merchandise is scanned by a scanner, the merchandise is registered as purchase merchandise in the registration apparatus 11. The accounting data is data related to accounting of the purchase merchandise for a single transaction. A merchandise code which is an identification code of purchase merchandise, a merchandise name, a unit price, the number, and the amount of money are included in the accounting data. The settlement process, performed by any of the settlement apparatuses 12, is a process of performing payment for a transaction of buying and selling merchandise based on the accounting data. In settlement, cash, credit cards, electronic money or the like are used to pay for the merchandise.

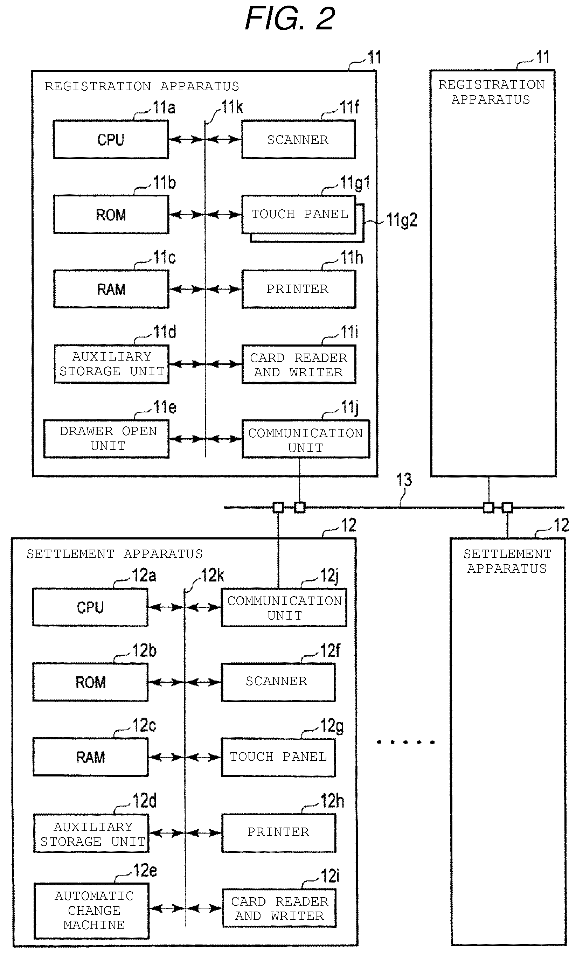

FIG. 2 is a block diagram illustrating main circuit configurations of the registration apparatus 11 and each of the settlement apparatuses 12. The registration apparatus 11 and the settlement apparatuses 12 are all connected to a network 13, such as a local area network (LAN). Without being illustrated, a server is connected to the network 13. The server has a merchandise database in which merchandise information such as a merchandise name and a unit price is associated with a merchandise code for each piece of merchandise.

The registration apparatus 11 and the settlement apparatuses 12 exchange information through the network 13. The network 13 may also be a wireless LAN or the Internet. The registration apparatus 11 and the settlement apparatuses 12 may exchange information through the server.

The registration apparatus 11 includes a central processing unit (CPU) 11a, a read only memory (ROM) 11b, a random access memory (RAM) 11c, an auxiliary storage unit 11d, a drawer open unit 11e, a scanner 11f, two touch panels 11g1 and 11g2, a printer 11h, a card reader and writer 11i, a communication unit 11j, and a transmission system 11k.

The CPU 11a is connected to the ROM 11b, the RAM 11c and the auxiliary storage unit 11d through the transmission system 11k so as to constitute a computer.

The CPU 11a corresponds to the central portion of the computer. The CPU 11a controls respective units so as to achieve various functions of the registration apparatus 11, based on the operating system, the middleware, and the application programs, which are stored in the ROM 11b and the RAM 11c.

The ROM 11b corresponds to the main memory portion of the computer. The ROM 11b stores the operating system. The ROM 11b may store the middleware and application programs in some cases. Further, the ROM 11b may also store data that is referred to when the CPU 11a performs various processes.

The RAM 11c corresponds to the main memory portion of the computer. The RAM 11c stores data that is referred to when the CPU 11a performs various processes. Further, the RAM 11c is utilized as a so-called work area for storing data that is temporarily used when the CPU 11a performs various processes.

The auxiliary storage unit 11d corresponds to the auxiliary memory portion of the computer. The auxiliary storage unit 11d stores data that is used when the CPU 11a performs various processes or data that is generated through the process performed by the CPU 11a. As the auxiliary storage unit 11d, for example, an electric erasable programmable read only memory (EEPROM), a hard disk drive (HDD), a solid state drive (SSD), or the like can be used.

The application program stored in the ROM 11b or the auxiliary storage unit 11d includes a control program describing a control process that is executed in the registration apparatus 11. The transfer of the registration apparatus 11 is generally performed in a state where the control program is stored in the ROM 11b or the auxiliary storage unit 11d. However, the transfer of the merchandise registration apparatus 11 may be performed in a state where the control program is not stored in the ROM 11b or the auxiliary storage unit 11d in some cases. In this case, the control program is transferred by being recorded in a removable recording medium such as a magnetic disk, a magneto-optical disk, an optical disk, and a semiconductor memory. Alternatively, the control program may be transferred through a network, and the control program may be written into the auxiliary storage unit 11d of the registration apparatus 11 which is separately transferred.

The drawer open unit 11e automatically opens a drawer that is intended to accommodate money.

The scanner 11f reads a bar code, or other computer-readable identifier, attached to merchandise, and obtains the merchandise code of the merchandise. As the scanner 11f, various known types of scanners can be used as they are. The scanner 11f may correlate with only one of various known types, or may correlate with a plurality of types. In other words, the scanner 11f may be a two-dimensional code scanner of a fixed type or a mobile type. The scanner 11f may be a scanner of a type that identifies merchandise from the image of the merchandise, by using an image recognition technique.

Between the two touch panels 11g1 and 11g2, the touch panel 11g1 is for a salesperson, and the touch panel 11g2 is for a customer. Each of the touch panels 11g1 and 11g2 includes a display device and a touch sensor. In the display device, the display screen thereof is any screen such as a GUI screen. As the display device, for example, a known device such as a color LCD can be used. The touch sensor is arranged to overlap the display surface of the display device. The touch sensor detects the operator's touch position on the display surface of the display device, and sends the position information to the CPU 11 a. As the touch sensor, a known device can be used.

The touch panel 11g1 for a salesperson is provided on the work table 23 such that the display screen faces the working space side of the salesperson 21. The touch panel 11g2 for a customer is provided on the work table 23 such that the display screen faces the aisle for the shopper 22.

The printer 11h issues a receipt by printing various types of strings or images on a receipt sheet. As this type of printer 11h, for example, a thermal printer, a dot impact printer, or the like can be used.

The card reader and writer 11i has a function of reading data recorded on the card, and a function of writing data into the card. The card may include a membership card referred to as a member's card or a point card, in addition to settlement cards such as a credit card, a debit card, an electronic money card, and a prepaid card. The card reader and writer 11i reads or rewrites electronic money data (balance, or the like) stored in an electronic money card. The card reader and writer 11i may be any one of magnetic, contact, and contactless types of devices, and may include a plurality of types of devices.

The communication unit 11j performs data communication with a plurality of settlement apparatuses 12 which are connected to each other through the network 13. The communication unit 11j can also perform data communication with other registration apparatuses 11 through the network 13.

The transmission system 11k transmits data pieces which are exchanged between the CPU 11 a, the ROM 11b, the RAM 11c, the auxiliary storage unit 11d, the drawer open unit 11e, the scanner 11f, the touch panels 11g1 and 11g2, the printer 11h, the card reader and writer 11i, and the communication unit 11j. As the transmission system 11k, a well-known transmission system including various buses such as a system bus and various interface circuits connecting the buses and respective units can be used.

As hardware of such registration apparatus 11, for example, an existing POS terminal can be used. An existing POS terminal used in the check-out system described herein does not need to monitor the status of each settlement apparatus 12.

Each settlement apparatus 12 includes a CPU 12a, a ROM 12b, a RAM 12c, an auxiliary storage unit 12d, an automatic change machine 12e, a scanner 12f, a touch panel 12g, a printer 12h, a card reader and writer 12i, a communication unit 12j, and a transmission system 12k.

The automatic change machine 12e collects coins and bills that are input. Further, the automatic change machine 12e discharges the coins and bills as changes.

The other functions of the CPU 12a, the ROM 12b, the RAM 12c, the auxiliary storage unit 12d, the scanner 12f, the touch panel 12g, the printer 12h, the card reader and writer 12i, the communication unit 12j, and the transmission system 12k are the same as those of the CPU 11a, the ROM 11b, the RAM 11c, the auxiliary storage unit 11d, the touch panels 11g1 and 11g2, the printer 11h, the card reader and writer 11i, the communication unit 11j, and the transmission system 11k of the registration apparatus 11.

In other words, the CPU 12a is connected to the ROM 12b, the RAM 12c and the auxiliary storage unit 12d through the transmission system 12k so as to constitute a computer. The CPU 12a controls respective units so as to implement various operations of the settlement apparatus 12, based on the operating system, the middleware, and the application programs, which are stored in the ROM 12b and the RAM 12c.

The application program stored in the ROM 12b or the auxiliary storage unit 12d includes a control program describing an information process that is executed in the settlement apparatus 12. The transfer of a settlement apparatus 12 is generally performed in a state where the control program is stored in the ROM 12b or the auxiliary storage unit 12d. However, the transfer of the settlement apparatus 12 may be performed in a state where the control program is not stored in the ROM 12b or the auxiliary storage unit 12d in some cases. In this case, the control program is transferred by being recorded in a removable recording medium such as a magnetic disk, a magneto-optical disk, an optical disk, and a semiconductor memory. Alternatively, the control program may be transferred through a network, and the control program may be written into the auxiliary storage unit 12d of the settlement apparatus 12 which is separately transferred.

As hardware of such settlement apparatus 12, for example, an existing POS terminal which correlates with a self-type can be used.

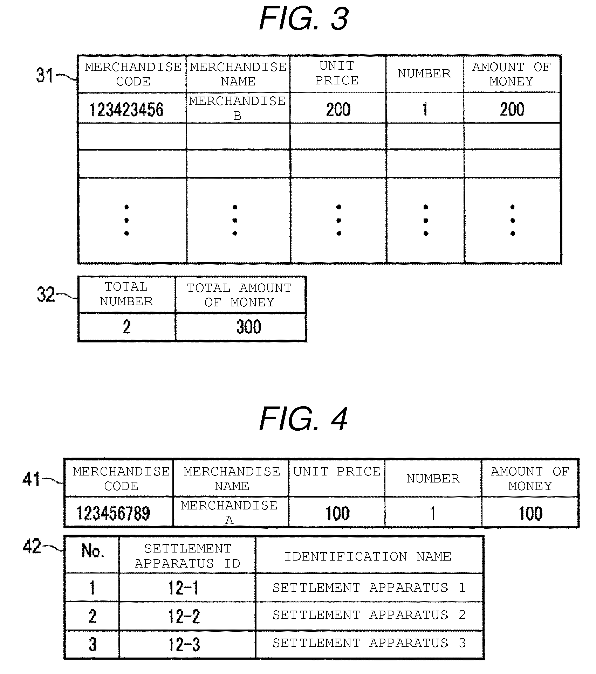

In the check-out system 10 including the registration apparatus 11 and the settlement apparatuses 12, which are configured in this manner, data memory areas 31 and 32, illustrated in FIG. 3, are respectively formed in the RAMs 11c and 12c of the registration apparatus 11 and the settlement apparatus 12.

The data memory area 31 is an area that stores data of purchase merchandise for one transaction. The data includes a merchandise code, a merchandise name, a unit price, the number, and the amount of money for each item of purchase merchandise. The merchandise code is a unique code for identifying each piece of merchandise individually. For example, a merchandise code which is represented by the bar code is assigned to each piece of merchandise, and the bar code is scanned by using the scanner 11f thereby, the registration apparatus 11 can acquire the merchandise code. The merchandise name and the unit price are respectively the name and the price for a piece of merchandise identified by the corresponding merchandise code. The number represents how many units of the merchandise are being purchased, and the amount of money is the amount of money corresponding to the number of units (sales amount). Hereinafter, the data memory area 31 is referred to as a transaction memory. The data memory area of the registration apparatus 11 is referred to as a transaction memory 31 a, and the data memory area of the settlement apparatus 12 is referred to as a transaction memory 31b.

The data memory area 32 is an area for storing the total number and the total amount of money. The total number is the sum of the numbers indicated in the respective records stored in the transaction memory 31, representing the total number of pieces of merchandise registered for the transaction. The total amount of money is the sum of the amounts of money indicated in the respective records stored in the transaction memory 31. Hereinafter, the data memory area 32 is referred to as a total memory. The data memory area of the registration apparatus 11 is referred to as a total memory 32a, and the data memory area of the settlement apparatus 12 is referred to as a total memory 32b.

Further, the check-out system 10 forms a data memory area 41 illustrated in FIG. 4 in the RAM 11c of the registration apparatus 11, and a data memory area 42 in the auxiliary storage unit 11d of the registration apparatus 11.

The data memory area 41 is an area that temporarily stores the merchandise code, the merchandise name, the unit price, the number, and the amount of money of one piece of purchase merchandise. Hereinafter, the data memory area 41 is referred to as a temporary buffer 41.

The data memory area 42 stores settlement apparatus IDs and identification names in association with a series of list numbers starting from "1" (indicating the order in which accounting data is to be sent to the settlement apparatuses 12). The settlement apparatus ID is a unique ID assigned to each settlement apparatus 12 and stored in the ROM 12b in order to identify each settlement apparatus 12. A registration apparatus ID is also stored in the ROM 11b for each registration apparatus 11. The identification name is a unique name corresponding to a settlement apparatus ID for each settlement apparatus 12. The operator of the registration apparatus 11 can determine which settlement apparatus 12 is indicated, based on the identification name. Hereinafter, the data memory area 42 is referred to as the list table 42.

The list may order the settlement apparatuses 12 according to distance from the registration apparatus 11. In such an embodiment, the settlement apparatus ID and the identification name of a settlement apparatus 12 closest to the registration apparatus 11 are given position "1" in the list table 42, and the settlement apparatus ID and the identification name of a settlement apparatus 12 second closest to the registration apparatus 11 are given position number "2". Thus, the transfer order of the accounting data is set in order of distance to the registration apparatus 11. Such a configuration is merely an example, and the order may not necessarily be set by distance to the registration apparatus 11.

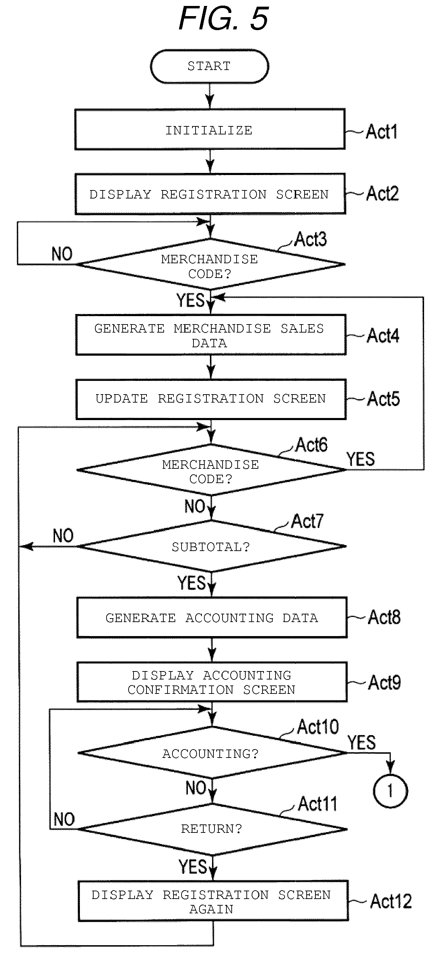

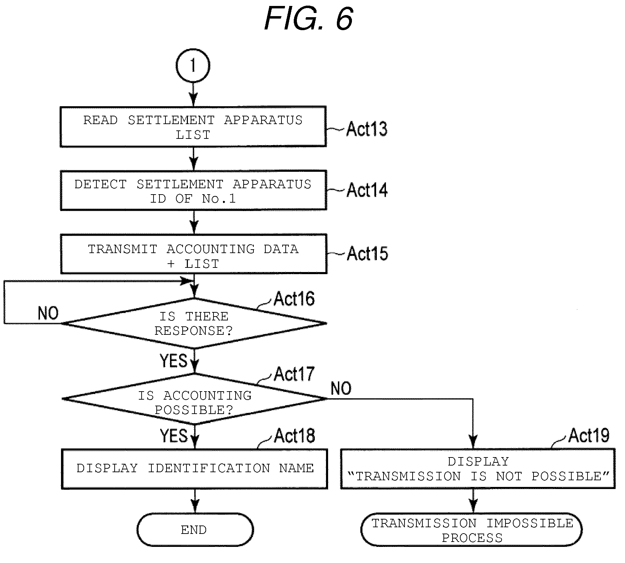

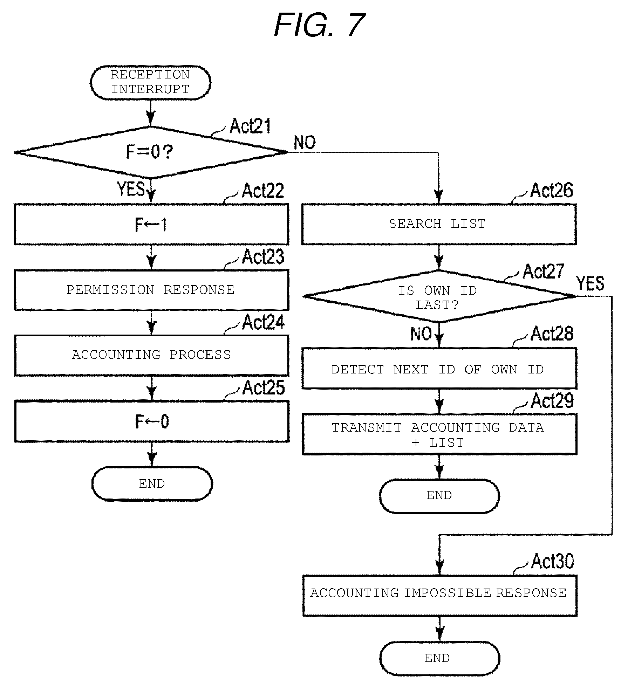

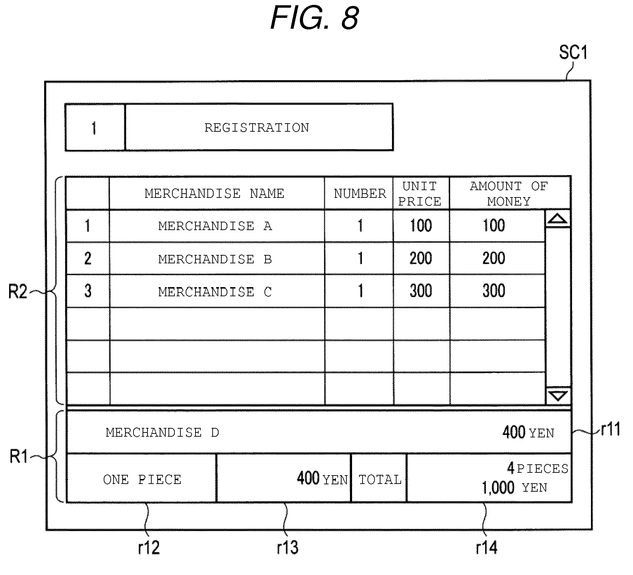

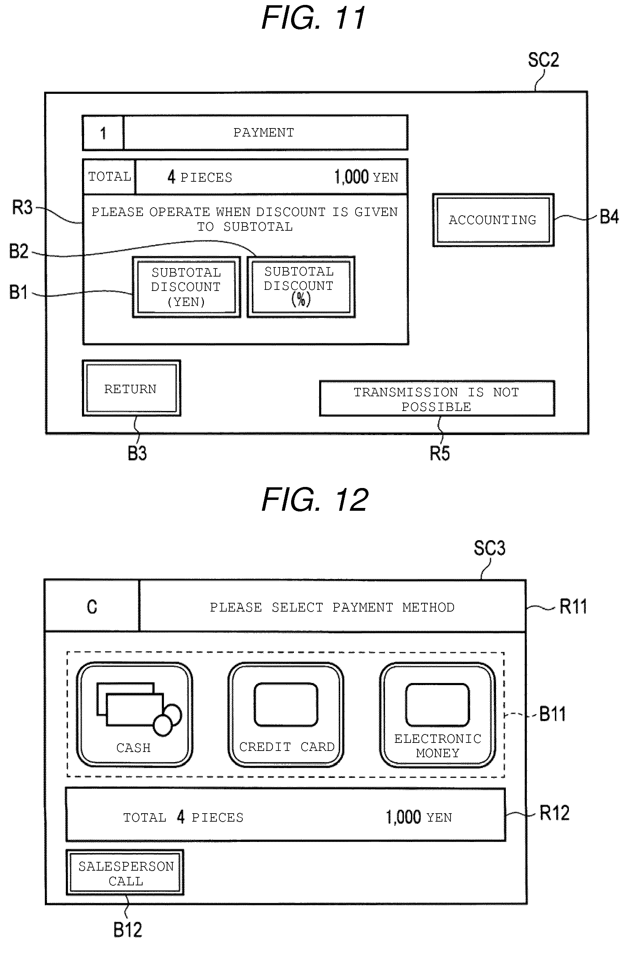

FIG. 5 and FIG. 6 are flow charts illustrating a main procedure of an information process that the CPU 11a of the registration apparatus 11 executes according to a control program. FIG. 7 is a flow chart illustrating a main procedure of an information process that the CPU 12a of the settlement apparatus 12 executes according to a control program. FIG. 8 to FIG. 11 are schematic views illustrating various screen examples which are displayed on the touch panels 11g1 and 11g2 of the registration apparatus 11. FIG. 12 to FIG. 14 are schematic views illustrating various screen examples which are displayed on the touch panel 12g of the settlement apparatus 12. Hereinafter, the operation of the check-out system 10 will be described with reference to the drawing. The contents of the processes to be described below are an example, and it is possible to appropriately utilize various processes capable of achieving the same result.

The registration apparatus 11 has a registration mode as one of the operating modes. If the registration apparatus 11 is activated in this registration mode, the CPU 11a starts the control process of the procedure illustrated in the flowchart of FIG. 5. First, the CPU 11a initializes the RAM 11c (Act1). The transaction memory 31a, the total memory 32a, and the temporary buffer 41 are cleared through the initialization.

Next, the CPU 11a displays a registration screen SC1 (see FIG. 8) in a part of the screen of the touch panel 11g (Act2).

The registration screen SC1 is intended to display the contents of the temporary buffer 41, the transaction memory 31a, and the total memory 32a, and for the salesperson 21 to check the status of the registration process. An example of the registration screen SC1 is illustrated in FIG. 8. The registration screen SC1 includes display areas R1 and R2. The display area R1 includes a display region r11 that represents the merchandise name and the unit price of the merchandise of which purchasing is registered most recently, a display region r12 that represents the number of units of the most recently registered merchandise, a display region r13 that represents the amount of money corresponding to the number displayed in display region r12, and a display region r14 that represents the total number of units and the total amount of money registered to the transaction. The display area R12 includes the list of merchandise names, the number of units of each item, the unit price of each item, and the amounts of money corresponding to the units of each item registered prior to registration of the merchandise displayed on the display area R1.

In addition, without being illustrated, the CPU 11a displays various function buttons such as a merchandise button intended for the salesperson 21 to designate the merchandise, and a subtotal button intended for the salesperson 21 to instruct the output of subtotal, in an area other than the area of the registration screen SC1, on the screen of the touch panel 11g.

If the salesperson 21 confirms that the registration screen SC1 is displayed on the touch panel 11g, the salesperson 21 recognizes that it is possible to register the merchandise that the shopper 22 purchases. If the shopper 22 moves to the work table 23 with the purchase merchandise, the salesperson 21 sequentially inputs the merchandise codes of the merchandise pieces, by operating, for example, the scanner 11f and the merchandise button. Then, when the input of the merchandise codes of all pieces of merchandise is completed, the salesperson 21 touches the subtotal button. Through the above operations, the registration (sales registration of one transaction) of the merchandise that one shopper purchases is completed.

The CPU 11a of the registration apparatus 11 performs the following information processes on such a registration operation. First, the CPU 11a that displays the registration screen SC1 waits for the input of the merchandise code (Act3). If the merchandise code is input through the scanner 11f or the merchandise button (YES at Act3), the CPU 11a acquires merchandise information such as the merchandise name and the unit price, which are associated with the merchandise code in the merchandise database. The CPU 11a calculates the amount of money for the number of merchandise by multiplying the number by the unit price. If the number of merchandise is input by using a keypad or the like before the merchandise code is input, the number of merchandise is the input number; and if the number of merchandise is not input, the number of merchandise is '1". The CPU 11a generates merchandise sales data including a merchandise code, a product name, a unit price, the number, and the amount of money, and stores the merchandise sales data in the temporary buffer 41 (Act4). In this case, the merchandise sales data is already stored in the temporary buffer 41, the CPU 11a moves the stored merchandise sales data to the transaction memory 31, and stores new merchandise sales data in the temporary buffer 41.

The CPU 11a adds the number and amount of money stored in the temporary buffer 41 to the total memory 32a. The CPU 11a updates the registration screen SC1 such that the contents of the temporary buffer 41 and the total memory 32a are displayed in the display area R1 and the contents of the transaction memory 31a are displayed in the display area R2 (Act5).

After updating the registration screen SC1, the CPU 11a checks whether or not the next merchandise code is input (Act6). If the merchandise code is not input (NO at Act6), the CPU 11a checks whether or not the subtotal button is touched (Act7). If the subtotal button is not touched (NO at Act7), the CPU 11a checks again whether or not the merchandise code is input (Act6). Thus, the CPU 11a waits for the input of the merchandise code and the touch of the subtotal button, as Act6 and Act7. In addition, if the occurrence of other events such as execution of other operations is checked in these standby states, the CPU 11a proceeds to a process corresponding to the occurred event. This operation is the same even in other standby states.

If the merchandise code is input in the standby states of Act6 and Act7 (YES at Act6), the CPU 11a proceeds to the process of Act4. The CPU 11a repeats the subsequent processes in the same manner as described above.

If the subtotal button is touched in the standby states of Act6 and Act7 (YES at Act7), the CPU 11a performs the processes of Act8 and Act9. The processing procedures of Act8 and Act9 are not limited to this order. The order may be reversed.

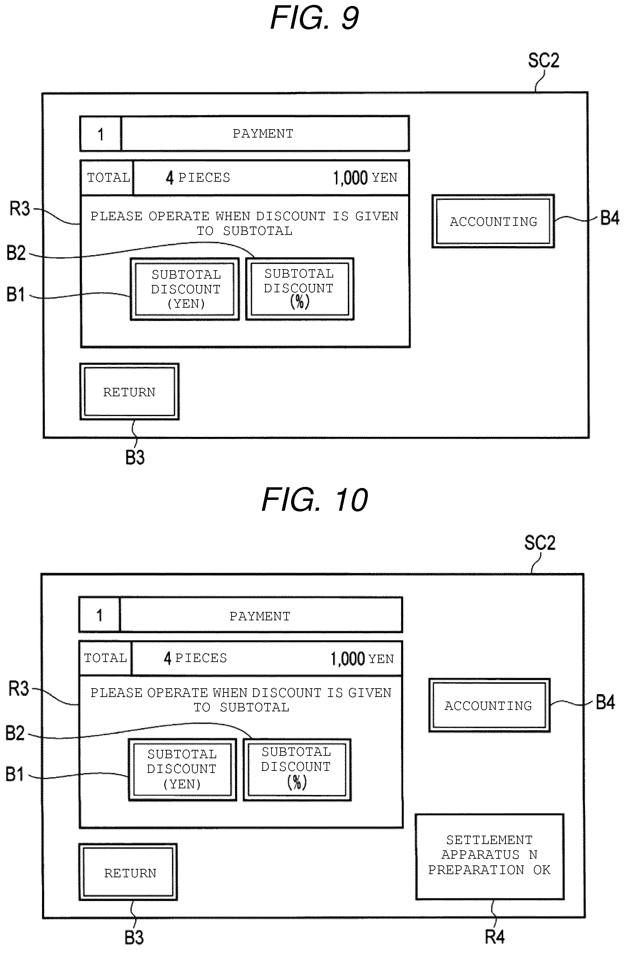

In Act8, the CPU 11a moves the merchandise sales data stored in the temporary buffer 41 to the transaction memory 31. The CPU 11a generates accounting data by using the data of the transaction memory 31a and the data of the total memory 32a (a generation unit). In Act9, the CPU 11a displays an accounting confirmation screen SC2 (see FIG. 9) in a part of the screen of the touch panel 11g.

An example of the accounting confirmation screen SC2 is illustrated in FIG. 9. The accounting confirmation screen SC2 includes a display area R3, and buttons B1, B2, B3, and B4. The display area R3 displays the total number, the total amount of money, and the like of the total memory 32a. The buttons B1 and B2 are subtotal discount buttons B1 and B2 intended for the salesperson 21 to apply a price cut or discount on the total amount of money. The button B3 is a return button B3 intended for the salesperson 21 to designate to return a part of the screen of the touch panel 11g to the registration screen SC1. The button B4 is an accounting button B4 intended for the salesperson 21 to instruct the transition to the accounting process when the registration of merchandise for one transaction is ended.

The CPU 11a which displays the accounting confirmation screen SC2 checks whether or not the accounting button is input (Act10). If the accounting button is not input (NO at Act10), the CPU 11a checks whether or not the return button B3 is input (Act11). If the return button B3 is not input (NO at Act11), the CPU 11a checks again whether or not the accounting button is input (Act10). Thus, the CPU 11a waits for the input of the accounting button B4, or the input of the return button B3, as Act10 and Act11.

The salesperson 21 who checks the accounting confirmation screen SC2 checks whether or not there remains merchandise to be registered among the merchandise that the shopper 22 purchases. If there remains the merchandise, the salesperson 21 touches the return button B3. If there does not remain the merchandise, the salesperson 21 touches the accounting button B4.

In the standby states of Act10 and Act11, if the return button B3 is input (YES at Act11), the CPU 11a returns a part of the screen of the touch panel 11g to the registration screen SC1 (Act12). Thereafter, the CPU 11a proceeds to the process of Act6, and repeats the subsequent processes in the same manner as described above.

In the standby states of Act10 and Act11, if the accounting button B4 is touched (YES at Act10), the CPU 11a proceeds to the process of Act13 of FIG. 6. In other words, the CPU 11a reads the list of IDs and identification names of the settlement apparatuses 12 from the list table 42 (Act13). Next, the CPU 11a reads the settlement apparatus ID of the list number "1" from the list table 42 (Act14). The CPU 11a instructs the communication unit 11j to transmit the accounting data generated in the process of Act8 and the list data acquired in the process of Act13, to the settlement apparatus with the ID of the list number "1" (Act15). In response to the instruction, the communication unit 11j transmits the accounting data and the list data, along with the registration apparatus ID stored in the ROM 11b as a transmission source, with the settlement apparatus ID at position number "1" in the list as a destination, over the network 13. The accounting data and list data are received by the settlement apparatus 12 whose settlement apparatus ID stored in the ROM 12b matches the destination settlement apparatus ID included with the transmission. Here, the CPU 11a cooperates with the communication unit 11j to constitute a transmission unit.

When receiving the accounting data and list data through the communication unit 12j, the CPU 12a of each settlement apparatus 12 checks whether the settlement apparatus ID which is included in the transmission as a destination matches the settlement apparatus ID stored in the ROM 12b. If the two settlement apparatus IDs do not match, the CPU 12a discards the transmitted data. If the two settlement apparatus IDs match, the CPU 12a loads the accounting data and the list data. The CPU 12a starts a reception interrupt process which is specifically illustrated in FIG. 7. Here, the CPU 12a cooperates with the communication unit 12j to constitute a reception unit.

If the reception interrupt process is started, the CPU 12a first checks a busy flag F (Act21) stored in the RAM 12c. The busy flag F is one-bit data which is set to "1" while the CPU 12a is processing settlement of a transaction, and is reset to "0" when the settlement process is complete. When the busy flag F is set, the settlement apparatus 12 is in the process of settling a transaction. Therefore, the settlement apparatus 12 cannot settle a new transaction. Here, the CPU 12a constitutes a determination unit that determines whether the settlement apparatus is available to settle a transaction, by the process of Act21.

If the busy flag F is reset, that is, if the settlement apparatus 12 is available to settle a transaction (YES at Act21), the CPU 12a executes the processes of Act22, Act23, and Act24. The processing procedures of Act22, Act23 and Act24 are not limited to this order. The order may be reversed.

In Act22, the CPU 12a sets the busy flag F to "1".

In Act23, the CPU 12a instructs the communication unit 12j to transmit data corresponding to a permission response to the registration apparatus 11, whose address was included as the transmission source when the accounting data and list data were transmitted. In response to the instruction, the communication unit 12j transmits the permission response, with the settlement apparatus ID from the ROM 12b as a transmission source, to the registration apparatus ID, which was the transmission source of the accounting data and the list data, over the network 13. The permission response is received by the registration apparatus 11 whose registration apparatus ID stored in the ROM 11b matches the registration apparatus ID transmitted as a destination address with the permission response. Here, the CPU 12a cooperates with the communication unit 12j to constitute a permission response section.

In Act24, the CPU 12a performs an accounting process based on the received accounting data (processing unit). The accounting process will be described later. If the accounting process is completed, the CPU 12a resets the busy flag F to "0" (Act25).

Thus, the reception interrupt process is completed.

Meanwhile, if the busy flag F is set when accounting data and list data are transmitted, that is, if the settlement apparatus 12 is not available to settle a transaction (NO at Act21), the CPU 12a searches the received list data (Act26). The CPU 12a checks whether or not the settlement apparatus ID stored in the ROM 12b is the last item in the list (Act27).

If the settlement apparatus ID is not the last list item (NO at Act27), the CPU 12a read the next settlement apparatus ID in the list (Act28), which is obtained by adding "1" to the list number associated with the settlement apparatus ID stored in the ROM 12b. The CPU 12a instructs the communication unit 12j to transfer the accounting data and the list data to the settlement apparatus ID read from the list (Act29). In response to this command, the communication unit 12j transmits accounting data and the list data, along with the detected settlement apparatus ID as a destination, keeping the registration apparatus ID as the source, over the network 13. The accounting data and list data is received by the settlement apparatus 12 whose settlement apparatus ID stored in ROM 12b matches the settlement apparatus ID in the transmission. Here, the CPU 12a cooperates with the communication unit 12j to constitute a transfer unit.

In contrast, if the settlement apparatus ID in the transmission is the last ID in the list (the maximum value of the list number) (YES at Act27), the CPU 12a instructs the communication unit 12j to transmit data corresponding to an accounting impossible response to the registration apparatus 11. In response to this instruction, the communication unit 12j transmits the accounting impossible response, with the settlement apparatus ID stored in the ROM 12b as a transmission source and the registration apparatus ID from the received transmission as a destination, over the network 13. The accounting impossible response is received by the registration apparatus 11 whose destination registration apparatus ID stored in ROM 11b matches the registration apparatus ID transmitted with the accounting impossible response. Here, the CPU 12a cooperates with the communication unit 12j to constitute an error response unit.

Thus, the reception interrupt process when the busy flag F is set is completed.

The CPU 11a of the registration apparatus 11 that transmits accounting data and list data in Act15 of FIG. 6 waits for a response from the settlement apparatus 12 (Act16). If a response is received through the communication unit 11j (YES at Act16), the CPU 11a identifies whether the response is the permission response or the accounting impossible response (Act17).

In the case of the permission response (YES at Act17), the CPU 11a searches the list table 42, and reads the identification name associated with the settlement apparatus ID which is the source of the response. As illustrated in FIG. 10, the CPU 11a displays a message in region R4 of accounting confirmation screen SC2 indicating that the settlement apparatus 12 of this identification name is available (Act18). The salesperson notifies the shopper that the settlement apparatus 12 specified by the identification name is available.

Meanwhile, in the case of the accounting impossible response (NO at Act17), as illustrated in FIG. 11, the CPU 11a displays a message in region R5 of accounting confirmation screen SC2 indicating that transmission of the accounting data is not possible (Act19). Thereafter, the CPU 11a performs a transmission impossible process.

In the transmission impossible process, for example, the CPU 11a waits for the re-input of the accounting button B4, and executes again Act13 and the subsequent processes if it is input. In this case, the salesperson confirming the message touches the accounting button B4.

In the transmission impossible process, for example, the accounting data with a unique identification code attached is transmitted to a server, and an accounting ticket having a bar code printed thereon indicating the identification code is issued by driving the printer 11h. In this case, the salesperson confirming the message passes the accounting ticket to the shopper. The shopper operates, for example, the scanner 12f of a settlement apparatus 12 in a location separate from the check-out lane to read the bar code of the accounting ticket. Thus, the CPU 12a of the settlement apparatus 12 acquires the accounting data attached with the identification code acquired from the bar code, from the server. The CPU 12a executes the processes of Act22, Act24 and Act25 of FIG. 7, based on the accounting data.

In this way, the salesperson 21 registers the merchandise that the shopper 22 purchases, in the registration apparatus 11. Upon completion of the registration, the salesperson 21 touches the accounting button B4 on the accounting confirmation screen SC2. Then, the accounting data required for the settlement of the transaction with the shopper 22 is transmitted along with the list data of the list table 42. The transmission destination of the accounting data and list data is a settlement apparatus 12 (the settlement apparatus 12-1) that is identified by the settlement apparatus ID of the list number "1".

Here, if the settlement apparatus 12-1 is capable of executing the settlement of the transaction (busy flag F = 0), a permission response is transmitted to the registration apparatus 11 from the settlement apparatus 12-1. As a result, since the identification name representing the settlement apparatus 12-1 and a message indicating that the settlement apparatus 12-1 is prepared for settlement are displayed on the accounting confirmation screen SC2 of the registration apparatus 11, the salesperson 21 notifies the shopper 22 that the settlement apparatus 12-1 is available.

In contrast, if the settlement apparatus 12-1 is incapable of executing the settlement of the transaction (busy flag F=1), the accounting data and list data are transferred to another settlement apparatus 12 from the settlement apparatus 12-1. The transfer destination is a settlement apparatus 12 (for example settlement apparatus 12-2) that is identified by the settlement apparatus ID of the list number "2".

Here, if the settlement apparatus 12-2 is capable of executing the settlement of the transaction (busy flag F=0), a permission response is transmitted to the registration apparatus 11 from the settlement apparatus 12-2. As a result, the accounting confirmation screen SC2 of the registration apparatus 11 displays a message indicating settlement apparatus 12-2 is available, and the salesperson 21 notifies the shopper 22 that the settlement apparatus 12-2 is available.

In contrast, if the settlement apparatus 12-2 is incapable of settling the transaction (busy flag F=1), the accounting data and list data are transferred to another settlement apparatus 12 from the settlement apparatus 12-2. The transfer destination is a settlement apparatus 12 (for example settlement apparatus 12-3) that is identified by the settlement apparatus ID of the list number "3".

Here, if the settlement apparatus 12-3 is capable of executing the settlement of the transaction (busy flag F=0), the permission response is transmitted to the registration apparatus 11 from the settlement apparatus 12-3. As a result, the accounting confirmation screen SC2 of the registration apparatus 11 displays a message indicating that the settlement apparatus 12-3 is available, and the salesperson 21 notifies the shopper 22 that the settlement apparatus 12-3 is available.

In contrast, if the settlement apparatus 12-3 is incapable of settling the transaction (busy flag F=1), all three settlement apparatuses 12-1, 12-2, and 12-3 are incapable of settling the transaction. In this case, an accounting impossible response is transmitted to the registration apparatus 11 from the settlement apparatus 12-3. As a result, the accounting confirmation screen SC2 of the registration apparatus 11 displays a message indicating transmission is not possible, and the salesperson 21 again touches the accounting button B4. Alternatively, since the accounting ticket is issued together with the message indicating that transmission is not possible, the salesperson 21 passes the accounting ticket to the shopper 22.

The shopper 22, who is notified from the salesperson 21 that a settlement apparatus 12, moves to the location of the available settlement apparatus 12. At this time, the settlement apparatus 12 starts the settlement process. If the settlement process is started, the settlement apparatus 12 displays the payment method select screen SC3 (see FIG. 12) in a part of the region of the touch panel 12g.

FIG. 12 illustrates an example of the payment method select screen SC3. The payment method select screen SC3 includes display areas R11 and R12, and buttons B11 and B12. The display area R11 displays operation guidance for the shopper 22 who operates the settlement apparatus 12. The display area R12 displays the total number of units and the total amount of money which are stored in the total memory 32b. The button B11 is a payment method button B11 intended for the shopper to designate a payment method from a plurality of payment methods. The button B12 is a salesperson call button B13 intended for the shopper 22 to call the salesperson 21.

Although cash, credit cards, and electronic moneys are exemplified as the payment method in the embodiment, the payment method is not limited thereto. Other payment methods may be added. Further, any of the payment methods may be omitted.

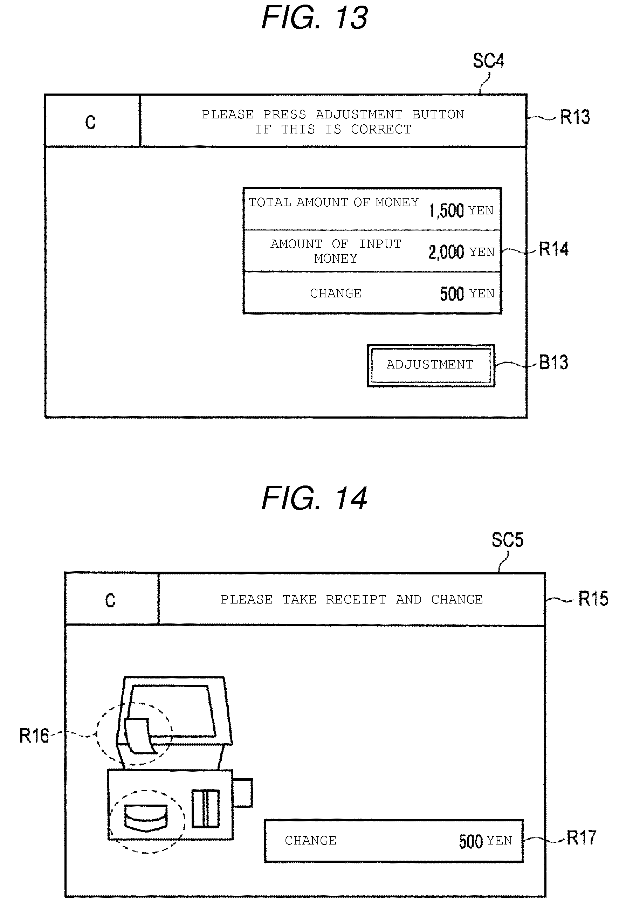

The shopper 22 confirming the payment method select screen SC3 determines a method of paying for the price, and touches the payment method button B 11. When the payment method button B11 is touched, the settlement apparatus 12 displays a payment screen SC4 (see FIG. 13) of the payment method selected through the payment method button B11 in a part of the screen of the touch panel 12g.

An example of the payment screen SC4 is illustrated in FIG. 13. FIG. 13 illustrates the payment screen SC4 when cash is selected as the payment method. The payment screen SC4 includes display areas R13 and R14, and a button B13. The display area R13 displays operation guidance for the shopper 22 who operates the settlement apparatus 12. The display area R14 displays the total amount of money, the amount of input money, and a balance. The button B 13 is an adjustment button B13 intended for the shopper who finishes inputting cash to designate the execution of adjustment.

The shopper who selects cash as a payment method inputs cash to the automatic change machine 12e. If cash of the total amount of money or more is input, the shopper touches the adjustment button B13. If the adjustment button B13 is touched, the settlement apparatus 12 executes the settlement process according to the selected payment method. Since such a settlement process is known, the detailed description will be omitted.

If the settlement process is completed, the settlement apparatus 12 displays a completion screen SC5 (see FIG. 14) in a part of the screen of the touch panel 12g.

FIG. 14 illustrates an example of the completion screen SC5 for cash payment. The completion screen SC5 includes display areas R15, R16, and R17. The display area R15 displays operation guidance for the shopper 22 who operates the settlement apparatus 12. The display area R16 displays a guide image. The guide image is an image to inform the shopper 22 of an outlet of a receipt and a dispensing opening of a change. Thus, the shopper can easily know the location where the receipt is issued and the change is dispensed, from the guide image. The display area R16 displays the change amount. Therefore, the shopper can know the change amount from the data on the display area R16.

The shopper confirming the completion screen SC8 receives the receipt and the change in accordance with the guide image. In response thereto, the busy flag F is reset to "0" and the settlement apparatus 12 is in the accounting standby state.

In this manner, according to the embodiment, the registration apparatus 11 may transmit the accounting data to the settlement apparatus 12 which is set to the list number "1", regardless of the state of each settlement apparatus 12, and the information will be relayed to an available settlement apparatus 12, or the operator will be notified that no settlement apparatus 12 is available. The registration apparatus 11 does not have to monitor the status of the settlement apparatus 12.

The disclosure is not limited to the embodiment.

For example, in the embodiment, the registration apparatus 11 may include a function for changing the list table 42. The registration apparatus 11 may include, for example, an edit section configured to display the list table 42 in edit mode on the screen SC1 of FIG. 8 to allow a user to change the order of the list. The edit section may receive user input in the "No." column shown in FIG. 4 indicating a reordering of the rows of the list, sort the list according to the user input, store the sorted list in the list table 42, and display the sorted list on the screen SC1. In the case of the embodiment described above, since the accounting data is first transmitted to the settlement apparatus 12 which is set to the list number "1", the settlement apparatus 12 at list number "1" is likely to be used frequently. If the list table 42 is changed from time to time, use of the settlement apparatuses 12 may be equalized.

The respective screens SC1, SC2, SC3, SC4, and SC5 which are illustrated and described in the embodiment are merely examples, and the screens are not limited to the illustrated layout.

While certain embodiments have been described, these embodiments have been presented by way of example only, and are not intended to limit the scope of the inventions.

## Claims

1. A check-out system with a registration apparatus, configured to generate accounting data for settlement of a transaction, connected through a network to a plurality of settlement apparatuses, configured to process settlement of the transaction based on the accounting data,
the registration apparatus comprising:
a transmission section configured to transmit, to any settlement apparatus through the network, the accounting data and a list indicating an order in which the accounting data is to be sent to the settlement apparatuses; and
a notification section configured to receive, through the network, a permission response from any settlement apparatus and identify the settlement apparatus that sent the permission response, and display a message with the name of the settlement apparatus that sent the permission response, and
the settlement apparatus comprising:
a reception section configured to receive the accounting data and the list through the network;
a determination section configured to determine whether settlement of the transaction is possible;
a permission response section configured to transmit the permission response to the registration apparatus through the network, if settlement of the transaction is possible; and
a transfer section configured to transfer, through the network, the accounting data and the list to another settlement apparatus, according to the list, if settlement of the transaction is not possible.

2. The system according to claim 1,
wherein the settlement apparatus further comprises: an error response section configured to transmit an error response to the registration apparatus through the network if the accounting data and the list are received when settlement of the transaction is not possible, if all the other settlement apparatuses are also unavailable for settlement of the transaction, and
wherein the registration apparatus further comprises a notification section configured to display an error message, when an error response is received from any settlement apparatus through the network.

3. The system according to claim 2, wherein the notification section is further configured to display a message indicating the settlement apparatus that sent the permission response, if a permission response is received, and to display a message indicating settlement is not possible if the error response is received.

4. The system according to claim 2 or 3, wherein the registration apparatus is configured to issue an accounting ticket if the error response is received.

5. The system according to any one of claims 2 to 4, wherein the settlement apparatus further comprises:
an error response section configured to transmit an error response to the registration apparatus through the network if the accounting data and the list are received when settlement of the transaction is not possible and the settlement apparatus is last on the list.

6. The system according to any one of claims 1 to 5, wherein the determination section is further configured to check a busy flag of the settlement apparatus.

7. The system according to any one of claims 1 to 6, wherein the transfer unit is configured to determine whether the settlement apparatus is last on the list.

8. A registration apparatus comprising:
a generation section configured to generate accounting data for settlement of a transaction;
a transmission section configured to transmit, through a network to any of a plurality of settlement apparatuses, the accounting data and a list indicating an order in which the accounting data is to be sent to the settlement apparatuses; and
a notification section configured to receive a permission response from any settlement apparatus, identify the settlement apparatus that sent the permission response, and display a message indicating the name of the settlement apparatus that sent the permission response.

9. The registration apparatus according to claim 8, wherein the notification section is further configured to receive an error response from any settlement apparatus and display a message indicating that settlement is not possible.

10. The registration apparatus according to claim 9, wherein the registration apparatus is configured to issue an accounting ticket if an error response is received.

11. The registration apparatus according to any one of claims 8 to 10, further comprising an edit section configured to allow a user to edit the list.

12. The registration apparatus according to any one of claims 8 to 11, wherein the transmission section is further configured to read the list, determine a settlement apparatus ID of the first settlement apparatus on the list, and transmit the settlement apparatus ID with the accounting data and the list.

13. The registration apparatus according to claim 12, wherein the transmission section is further configured to transmit the registration apparatus ID of the registration apparatus with the settlement apparatus ID, the accounting data, and the list.

14. A settlement apparatus comprising:
a reception section configured to receive, through a network, accounting data for settlement of a transaction and a list indicating an order in which accounting data is to be sent to a plurality of settlement apparatuses including the settlement apparatus;
a processing section configured to process settlement of the transaction based on the accounting data;
a determination section configured to determine whether or not settlement of the transaction is possible;
a permission response section configured to transmits the permission response through the network if settlement of the transaction is possible; and
a transfer section configured to transfer, through the network, the accounting data and the list to another settlement apparatus according to the list, if settlement of the transaction is not possible.

15. The settlement apparatus according to claim 14, further comprising:
an error response section configured to transmit an error response through the network if the accounting data and the list are received when settlement of the transaction is not possible, if all the other settlement apparatuses in the plurality of settlement apparatuses are also unavailable for settlement of the transaction.
